(19) Europäisches Patentamt
European Patent Office
Office européen des brevets

(11) **EP 3 328 677 B1**

(12) **EUROPÄISCHE PATENTSCHRIFT**

(45) Veröffentlichungstag und Bekanntmachung des Hinweises auf die Patenterteilung:
**16.12.2020 Patentblatt 2020/51**

(21) Anmeldenummer: **16744355.5**

(22) Anmeldetag: **22.07.2016**

(51) Int Cl.:
*B60L 3/00* (2019.01)  *G01R 31/36* (2020.01)
*G01R 31/00* (2006.01)  *G05F 1/10* (2006.01)

(86) Internationale Anmeldenummer:
**PCT/EP2016/067485**

(87) Internationale Veröffentlichungsnummer:
**WO 2017/016994 (02.02.2017 Gazette 2017/05)**

(54) **BATTERIEEMULATOR UND VERFAHREN ZUM REGELN DES BATTERIEEMULATORS**

BATTERY EMULATOR, AND METHOD FOR CONTROLLING THE BATTERY EMULATOR

ÉMULATEUR DE BATTERIE ET PROCÉDÉ POUR RÉGLER L'ÉMULATEUR DE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2015 AT 506762015**

(43) Veröffentlichungstag der Anmeldung:
**06.06.2018 Patentblatt 2018/23**

(73) Patentinhaber: **AVL List GmbH**
**8020 Graz (AT)**

(72) Erfinder: **KÖNIG, Oliver**
**8042 Graz (AT)**

(74) Vertreter: **Patentanwälte Pinter & Weiss OG**
**Prinz-Eugen-Straße 70**
**1040 Wien (AT)**

(56) Entgegenhaltungen:
WO-A1-2013/135741    WO-A1-2013/174967
WO-A1-2013/174972    DE-A1-102007 027 049
JP-A- H10 304 677    JP-A- 2011 158 354

• OLIVER KONIG ET AL: "Model predictive control of a battery emulator for testing of hybrid and electric powertrains", 2011 IEEE VEHICLE POWER AND PROPULSION CONFERENCE (VPPC 2011) : CHICAGO, ILLINOIS, USA, 6 - 9 SEPTEMBER 2011, IEEE, PISCATAWAY, NJ, 6. September 2011 (2011-09-06), Seiten 1-6, XP031974964, DOI: 10.1109/VPPC.2011.6043174 ISBN: 978-1-61284-248-6

**Beschreibung**

Die gegenständliche Erfindung betrifft ein Verfahren zum Regeln eines Batterieemulators mit einem Ausgangsfilter mit einer Filterkapazität und einem dazu parallel geschalteten Stützkondensator, an dem eine Ausgangsspannung, wobei die Filterkapazität des Batterieemulators über eine elektrische Leitung mit dem Stützkondensator verbunden ist, um den Stützkondensator örtlich von den restlichen Komponenten des Batterieemulators zu trennen, und zur Regelung der Ausgangsspannung eine modellbasierte Regelung mit einem Modell des Batterieemulators verwendet wird. Weiters betrifft die Erfindung einen Batterieemulator mit einer Spannungsversorgung, die einen eingangsseitigen Gleichrichter mit einem Gleichspannungszwischenkreis, einen damit verbundenen Gleichspannungswandler und ein Ausgangsfilter mit einer Filterkapazität am Ausgang des Gleichspannungswandlers aufweist, mit einem Stützkondensator an dem eine Ausgangsspannung anliegt und der örtlich getrennt von der Spannungsversorgung angeordnet ist, wobei die Filterkapazität über eine elektrische Leitung mit dem Stützkondensator verbunden ist, und mit einer Emulator-Regeleinheit zur modellbasierten Regelung der Ausgangsspannung des Batterieemulators, in der ein Modell des Batterieemulators implementiert ist und die Verwendung des Batterieemulators zur Prüfung eines elektrischen Prüflings.

Bei der Entwicklung von Hybridantriebssträngen oder Hybridfahrzeugen sind in den verschiedenen Entwicklungsphasen Tests des Hybridantriebsstränges oder des Hybridfahrzeuges, oder Komponenten davon, auf einem Prüfstand erforderlich. Insbesondere in frühen Entwicklungsphasen ist es aber oftmals so, dass die Traktionsbatterien noch nicht verfügbar sind. Aber auch in späteren Entwicklungsphasen ist es oftmals erwünscht, Test ohne der Traktionsbatterie durchzuführen, da die Traktionsbatterien ein aufwendiges Handling erfordern, Beispielsweise müssen Traktionsbatterien für einen Test konditioniert werden, was die Temperierung, die Einstellung eines Ladezustandes (State of Charge (SoC)) oder eines Alterungszustandes (State of Health (SoH)) umfassen kann. Abgesehen davon sind Tests mit realen physischen Traktionsbatterien kaum reproduzierbar. Aus diesem Grund werden für solche Tests oftmals sogenannte Batterieemulatoren eingesetzt, die die Traktionsbatterie nachbilden. Ein Batterieemulator ist in der Regel leistungselektronischer Wandler, der am Ausgang eine gewünschte Gleichspannung zur Verfügung stellt, die an eine elektrische Last, beispielswiese der Hybridantriebsstrang, angeschlossen ist. Je nach momentaner elektrischer Last ergibt sich ein gewisser Laststrom am Ausgang des Wechselrichters. In einem realen Hybridantriebsstrang kann sich der Laststrom aber sehr rasch ändern. Abgesehen davon wird durch den Batterieemulator ein Antriebswechselrichter des Hybridantriebsstranges versorgt, was zu hochfrequenten Rückwirkungen auf den Batterieemulator führen kann. Diese Umstände führen zu Stabilitätsproblemen im Betrieb des Batterieemulator.

Aus der WO 2013/174967 A1 ist ein solcher Batterieemulator bekannt, bei dem eine modellbasierte, hier modellprädiktive, Regelung verwendet wird, bei der in das Modell der Regelstrecke ein Lastmodell des Antriebssystems eingebunden wird. Durch die Integration des Lastmodells kann die Regelung stabilisiert werden und es kann ein gutes Führungsverhalten erreicht werden. Das gleiche ist in König O., et al., "Model Predictive Control of a Battery Emulator for Testing of Hybrid and Electric Powertrains", 2011 IEEE Vehicle Power and Propulsion Conference, Chicago, Illinois, USA, 6.9. - 9.9.2011 beschrieben.

Ein Batterieemulator, der über ein Batteriemodell die aktuellen Spannungswerte am DC-Ausgang berechnet und dabei das unterschiedliche Lade- und Entladeverhalten realer Batterien nachbildet ist beispielsweise aus der WO 2013/135741 A1 bekannt. In der WO 2013/135741 A1 sind jedoch keine Details der Regelung des Batterieemulators genannt.

Aus der JP 3402117 B2 ist ein Solar-Wechselrichter bekannt, der einen Gleichstrom von den Solarmodulen in eine Wechselspannung wandelt. Der Solar-Wechselrichter wird in herkömmlicher Weise von einem Zustandsregler mit Verstärkungsfaktoren und Integration des Regelfehlers geregelt. Die Verstärkungsfaktoren werden aus einem Zustandsraummodell des Wechselrichters ermittelt, wobei in das Zustandsraummodell auch eine Leitungsinduktivität eingebunden ist. Die JP 3402117 B2 zeigt damit keine modellbasierte Regelung, sondern das Zustandsraummodell wird lediglich in herkömmlicher Weise zur Reglerauslegung verwendet.

Ebenso ist es bekannt, den Ausgang eines Batterieemulators mit einem großen (bei Bedarf auch zuschaltbaren) Stützkondensator zu stützen. Um Resonanzen zwischen parasitären Leitungsinduktivitäten der Leitung zwischen Batterieemulator und der verbundenen Last und dem Stützkondensator zu dämpfen, wird oftmals auch ein Dämpfungswiderstand in Serie in der Leitung zur Last oder parallel zum Stützkondensator verwendet. Wegen der anwendungsbedingt benötigten Leistungen von typischer Weise mehreren 100 kW sind Batterieemulatoren entsprechend groß und können meist nicht direkt neben der Last aufgestellt werden, sondern in einigen Metern Entfernung. Dabei sind auf einem Prüfstand Distanzen von 10 bis 50 m durch aus üblich. Die daraus resultierende parasitäre Leitungsinduktivität bildet zusammen mit dem Stützkondensator des Batterieemulators und dem Eingangskondensator der elektrischen Last (Antriebswechselrichter) einen Schwingkreis, der sowohl von der Regelung des Batterieemulators als auch von der Last angeregt werden kann. Als Folge kann die Spannungsregelung des Batterieemulators instabil werden und es kann notwendig sein, den Prüflauf am Prüfstand abzubrechen. Im schlimmsten Fall kann dadurch sogar die elektrische Last, die als Prüfling am Prüfstand getestet werden soll, beschädigt werden. Das kann durch die Verwendung von größeren Stützkondensatoren verbessert werden. Je größer der Stützkondensator, umso stabiler wird die Ausgangsspannung, aber umso geringer wird wegen der nötigen großen Umladeströme gleichzeitig auch die maximal mögliche Änderungsrate der Ausgangsspannung. Eine schnelle Spannungsänderung wird aber wiederum für die getreue Nachbildung einer Batterieimpedanz bei schnellen Laständerungen benötigt. Ein großer Stützkondensator ist daher kontraproduktiv. In einem Wechselrichter, wie in der JP 3402117 B2 beschrieben, kann ein ausgangsseitiger Stützkondensator $C_S$ natürlich nicht verwendet werden.

Zusätzlich führt der passive Dämpfungswiderstand zu erheblichen Verlusten und schränkt auch die Rückspeisefähigkeit bei geringer Spannung und hohen Strömen ein. Daher ist auch ein Dämpfungswiderstand eher unerwünscht.

Es ist daher eine Aufgabe der gegenständlichen Erfindung, die obigen Probleme zu vermindern und insbesondere einen Batterieemulator mit ausreichend stabiler Ausgangsspannung auch bei schnellen Laständerungen und mit geringeren Verlusten zu realisieren.

Diese Aufgabe wird gelöst, indem in das Modell des Batterieemulators eine Leitungsinduktivität der elektrischen Leitung und der Stützkondensator eingebunden wird. Der örtlich getrennte Stützkondensator stützt die Ausgangsspannung des Batterieemulators direkt beim Prüfling. Zur Verbesserung der Regelgüte des Batterieemulators wird nun die Leitungsinduktivität und der Stützkondensator in das Modell des Batterieemulators eingebunden, womit eine hohe Regelbandbreite und auch schnelle Laständerungen bei ausreichender Stabilität der Regelung realisierbar sind. Gleichzeitig werden damit zusätzliche Dämpfungswiderstände überflüssig, da die Regelung selbst in der Lage ist, Resonanzen ausreichend schnell zu dämpfen.

Die Regelgüte kann noch weiter verbessert werden, wenn in das Modell des Batterieemulators zusätzlich ein Lastmodell eines vom Batterieemulator versorgten elektrischen Prüflings eingebunden wird. Damit kann die Regelung die gesamte Dynamik des geregelten Systems noch besser berücksichtigen.

Hier ist es aufgrund der Einfachheit vorteilhaft, wenn als Lastmodell eine Eingangskapazität des Prüflings verwendet wird oder eine Konstantleistungslast verwendet wird, wobei die Konstantleistungslast um einen Betriebspunkt des Batterieemulators linearisiert wird.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt

Fig.1     einen Batterieemulator nach dem Stand der Technik,
Fig.2     einen erfindungsgemäßen Batterieemulator mit einem elektrischen Prüfling und
Fig.3     ein Blockschaltbild der Modellstruktur des Batterieemulators.

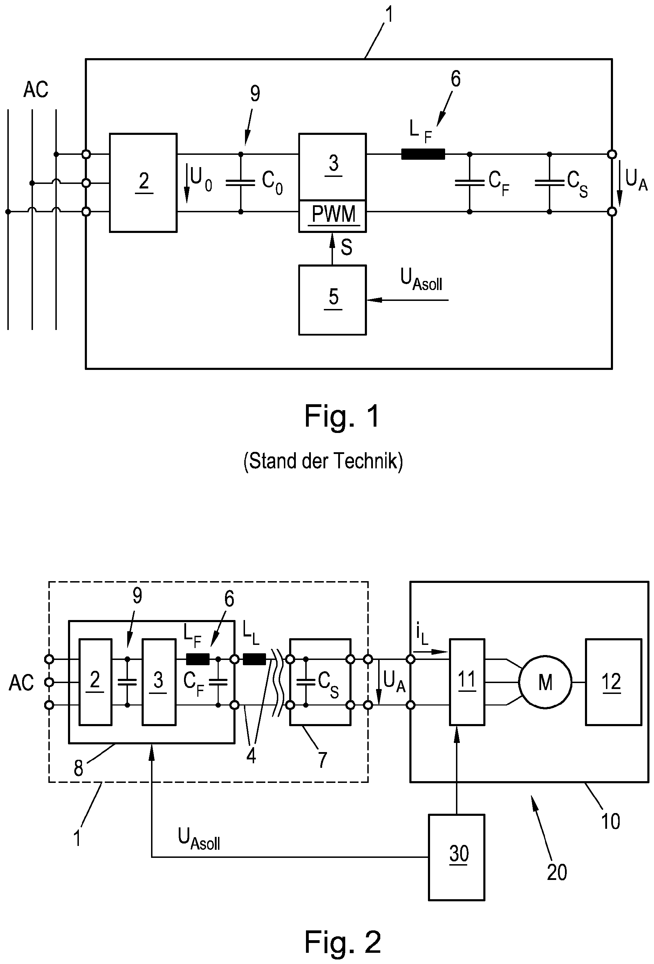

Der erfindungsgemäße Batterieemulator 1 besteht aus einem eingangsseitigen Gleichrichter 2, der über einen Gleichspannungszwischenkreis 9 mit einer Zwischenkreisspannung $V_0$ und einer Zwischenkreiskapazität $C_0$ mit einem Gleichspannungswandler 3 verbunden ist. Der Batterieemulator 1 wird von einem Wechselspannungsnetz AC versorgt. Am Ausgang des Gleichspannungswandlers 3 ist ein Ausgangsfilter 6 bestehend aus einer Filterinduktivität $L_F$ in Serie zur Ausgangsleitung und einer parallel geschalteten Filterkapazität $C_F$ angeordnet. Der Gleichspannungswandler 3 kann bekanntermaßen auch mehrphasig ausgeführt sein, wobei in diesem Fall für jede Phase eine Filterinduktivität $L_F$ vorgesehen ist. Der Gleichspannungswandler 3 ist beispielsweise als Synchronwandler mit einer Anzahl von Halbbrücken (je eine Halbbrücke pro Phase) mit Halbleiterschaltern implementiert. Ein solcher Batterieemulator 1 ist beispielsweise aus der Fig.2 der WO 2013/174967 A1 bekannt.

Ausgangsseitig ist parallel zu den Ausgangsanschlüssen, an denen die Ausgangsspannung $u_A$ anliegt, und parallel zur Filterkapazität $C_F$ noch ein Stützkondensator $C_S$ vorgesehen.

Im Batterieemulator 1 ist weiters eine Emulator-Steuereinheit 5 vorgesehen, die den Gleichspannungswandler 3, bzw. die Schalter des Gleichspannungswandlers 3, ansteuert, um die gewünschte Ausgangsspannung $u_{Asoll}$, die von einer übergeordneten Steuereinheit angefordert wird, zu erzeugen. In der Regel ist eine Pulsweitenmodulation PWM implementiert, um die Halbleiterschalter des Gleichspannungswandler 3 anzusteuern, wie hinlänglich bekannt ist und wie in Fig.1 angedeutet ist. Die Pulsweitenmodulation PWM könnte auch direkt in der Emulator-Steuereinheit 5 implementiert sein. Die Emulator-Steuereinheit 5 erzeugt aus dem Sollwert der Regelung, hier die Ausgangsspannung $u_{Asoll}$, die Stellgröße s für den Gleichspannungswandler 3 bzw. Pulsweitenmodulation (PWM).

Als erste erfindungsgemäße Maßnahme wird der Stützkondensator $C_S$ des Batterieemulators 1 hardwaremäßig und örtlich getrennt von den restlichen Komponenten des Batterieemulators 1 angeordnet. Der Stützkondensator $C_S$ wird beispielsweise in einer separaten Anschlussbox 7 angeordnet, wie in Fig.2 dargestellt. Das Ergebnis ist ein verteilter Batterieemulator 1 mit einer Spannungsversorgung 8 und der örtlich getrennten Anschlussbox 7 mit dem Stützkondensator $C_S$. Die Anschlussbox 7 mit dem Stützkondensator $C_S$ wird dann über eine Leitung 4 mit dem Ausgangsfilter 7 verbunden. In der Spannungsversorgung 8 sind der Gleichrichter 2, der DC-Zwischenkreis, der Gleichspannungswandler 3 und das Ausgangsfilter 6 angeordnet. Das ermöglicht es, den Stützkondensator $C_S$ trotz der baulichen Größe des Batterieemulators 1 örtlich getrennt von der Spannungsversorgung 8 nahe an der elektrischen Last anzuordnen. Die Leitung 4 kann dabei sehr lange werden, wie in Fig.2 durch die Unterbrechung angedeutet ist, und kann auch Längen von 10 bis 50m erreichen. Dadurch kann zwar eine Stabilisierung der am Stützkondensator $C_S$ anliegenden Ausgangsspannung $u_A$ des Batterieemulators 1 erreicht werden, allerdings wird die Dynamik des verteilten Batterieemulators 1 komplexer und schwieriger zu regeln, weil die resultierende Leitungsinduktivität $L_L$ zusammen mit der Filterkapazität $C_F$ und dem Stützkondensator $C_S$ einen zusätzlichen Schwingkreis bildet. Dieser Schwingkreis hat eine weitere Resonanz zur Folge, zusätzlich zu jener zwischen der Filterinduktivität $L_F$ und der Filterkapazität $C_F$. Der Regler des Batterieemulators 1 darf die Resonanzen nicht anregen bzw. muss diese bei Anregung durch den Prüfling 10 geeignet dämpfen.

Um die Regelung des derart verteilten Batterieemulators 1 für das Erreichen einer hohen Dynamik (hohe Änderungsrate der Ausgangsspannung $u_A$) zu ermöglichen, ist eine modellbasierte Regelung auf Basis eines Modells des Batterieemulators 1 vorgesehen. Das Modell des Batterieemulators 1 wird dazu in der Emulator-Steuereinheit 5 in einer modellbasierten Regelung, wie z.B. einer modellprädiktiven Regelung, verwendet, um den Batterieemulator 1 zu regeln. "Modellbasierte Regelung" bedeutet dabei, dass das Modell bzw. der Modellausgang verwendet wird, um die Stellgröße $s_k$ des Batterieemulators 1 für den nächsten Abtastschritt k zu berechnen. Das Modell des Batterieemulators 1 umfasst dabei auch den Stützkondensator $C_S$ und die zwischen der Spannungsversorgung 8 und dem Stützkondensator $C_S$ vorhandene Leitungsinduktivität $L_L$ der Leitung 4, wie in Fig.2 angedeutet.

In der erfindungsgemäßen Anwendung ist die Leitungsinduktivität $L_L$ dominant und ausreichend. Es sei aber angemerkt, dass man im Modell des Batterieemulators 1 zusätzlich auch den Kapazitätsbelag und/oder den Ableitungsbelag und/oder den Widerstandsbelag der Leitung 4 berücksichtigen könnte.

Zur Durchführung eines Prüflaufs auf einem Prüfstand 20 wird der Batterieemulator 1, bzw. die Anschlussbox 7 des Batterieemulators 1 mit dem elektrischen Prüfling 10 verbunden. Der Prüfling 10 besteht beispielsweise aus einem Antriebswechselrichter 11, der einen Elektromotor M versorgt. Der Elektromotor M treibt irgendeine Last 12, beispielsweise eine Belastungsmaschine oder ein Antriebsstrang mit Belastungsmaschine, an. Der Prüfling 10 kann z.B. ein Hybridantriebsstrang eines Fahrzeugs sein. Am Prüfstand 20 ist auch ein Prüfstandrechner 30 vorgesehen, der die Durchführung des Prüflaufs steuert und überwacht. Der Prüfstandrechner 30 gibt dabei die gewünschte Ausgangsspannung $u_{Asoll}$ und einen Sollwert für den Antriebswechselrichter 11 vor. Am Prüfstand 20 sind natürlich Messeinrichtungen vorhanden, um benötigte Messgrößen für die Regelung zur Durchführung des Prüflaufs, wie beispielsweise ein Drehmoment, eine Drehzahl, elektrische Ströme oder elektrische Spannungen im Hybridantriebsstrang, zu erfassen. Die Messeinrichtungen sind aus Gründen der Übersichtlichkeit nicht dargestellt.

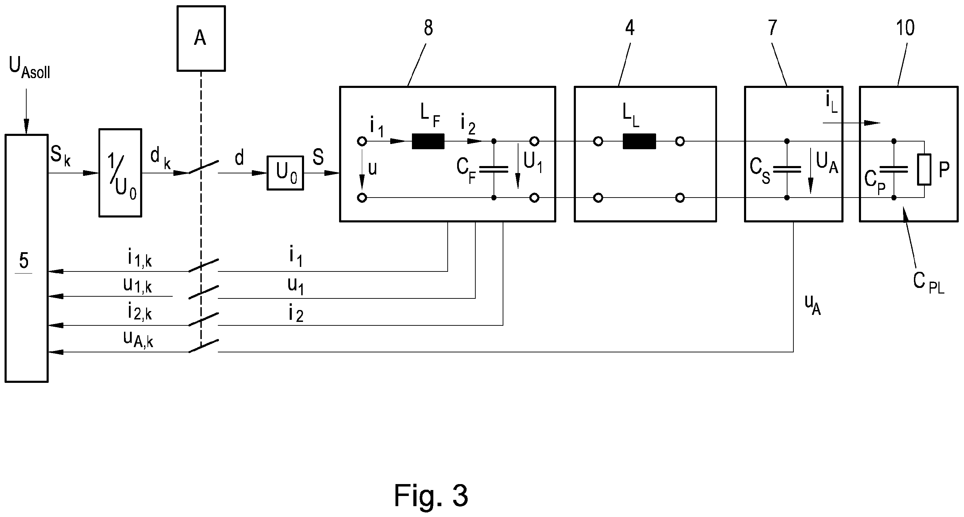

Damit ergibt sich das Blockschaltbild des Modells des Batterieemulators 1 wie in Fig.3 dargestellt, wobei in diesem Fall auch der elektrische Prüfling 10 mit einem Lastmodell eingebunden ist.

Aus elektrischer Sicht bildet der Prüfling 10 eine Konstantleistungslast CPL wie in der WO 2013/174967 A1 beschrieben. Die Konstantleistungslast CPL führt zu einer nichtlinearen

Zustandsgleichung, die um einen Betriebspunkt linearisiert wird, ebenfalls wie in der WO 2013/174967 A1 beschrieben. Dabei ergibt sich die Beziehung zwischen dem von der Konstantleistungslast CPL aufgenommenen Strom und der Versorgungsspannung $u_A$ der Konstantleistungslast CPL zu $\tilde{i}_L = \dfrac{P}{u_A}$ , mit dem Leistungsbedarf P des Prüflings 10. Durch die Einführung eines betriebspunktabhängigen differentiellen Ersatzwiderstandes $r_P = -\dfrac{u_A^2}{P}$ kann die Zustandsgleichung um einen Betriebspunkt in Form einer Ausgangsspannung $u_A$ und eines Laststromes iL linearisiert werden. Dieses Lastmodell in Form der Konstantleistungslast CPL kann ebenfalls in das Modell des Batterieemulators 1 eingebunden werden, wie in der WO 2013/174967 A1 beschrieben. In einer einfacheren Ausgestaltung könnte das Lastmodell einfach aus der Eingangskapazität des Prüflings 10 gebildet werden. Diese Eingangskapazität kann einfach gemessen werden, oder ist bekannt. Das Lastmodell kann im Modell des Batterieemulators 1 aber auch gar nicht eingebunden werden.

Mit der Modellstruktur wie in Fig.3 dargestellt kann die folgende Zustandsgleichung als Modell des Batterieemulator 1 erstellt werden, in dem als Lastmodell die Eingangskapazität $C_P$ des Prüflings 10 verwendet wird, die aber zur Vereinfachung auch weggelassen werden könnte. Mit dem Zustandsvektor $\boldsymbol{x}_c = [i_1\ v_1\ i_2\ u_A]^T$, der im Betrieb gemessen wird, ergibt sich das Zustandsraummodell zu

$$\dot{x}_c = \begin{bmatrix} \dfrac{-R_{L_F}}{L_F} & \dfrac{-1}{L_F} & 0 & 0 \\ \dfrac{1}{C_F} & 0 & \dfrac{-1}{C_F} & 0 \\ 0 & \dfrac{1}{L_L} & \dfrac{-R_{L_L}}{L_L} & \dfrac{-1}{L_L} \\ 0 & 0 & \dfrac{1}{C_S+C_P} & 0 \end{bmatrix} x_c + \begin{bmatrix} \dfrac{1}{L_F} \\ 0 \\ 0 \\ 0 \end{bmatrix} s + \begin{bmatrix} 0 \\ 0 \\ 0 \\ \dfrac{-1}{C_S+C_P} \end{bmatrix} i_L \,.$$

Darin bezeichnet $R_{L_F}$ den parasitären Widerstand der Filterinduktivität $L_F$ und $R_{L_L}$ den Leitungswiderstand der Leitung 4, der bekannt ist oder gemessen werden kann. Die Stellgröße s ergibt sich aus s = d·$u_0$, mit dem Duty Cycle d der Pulsweitenmodulation PWM. Im Falle eines mehrphasigen Gleichspannungswandlers 3 werden die einzelnen Filterinduktivitäten jeder Phase zu einer Filterinduktivität $L_F$ zusammengefasst und die Ströme der einzelnen Phasen zu einem gemeinsamen Drosselstrom $i_1$ addiert. Größen des Zustandsvektors $x_c$ könnten natürlich auch durch einen regelungstechnischen Beobachter geschätzt werden, falls diese nicht direkt gemessen werden.

Mit dem beschriebenen Lastmodell für eine Konstantleistungslast CPL kann dieses Zustandsraummodell erweitert werden, indem der differentielle Ersatzwiderstand $r_P$ eingefügt wird.

$$\dot{x}_c = \begin{bmatrix} \dfrac{-R_{L_F}}{L_F} & \dfrac{-1}{L_F} & 0 & 0 \\ \dfrac{1}{C_F} & 0 & \dfrac{-1}{C_F} & 0 \\ 0 & \dfrac{1}{L_L} & \dfrac{-R_{L_L}}{L_L} & \dfrac{-1}{L_L} \\ 0 & 0 & \dfrac{1}{C_S+C_P} & \dfrac{-1}{(C_S+C_P)r_P} \end{bmatrix} x_c + \begin{bmatrix} \dfrac{1}{L_F} \\ 0 \\ 0 \\ 0 \end{bmatrix} s + \begin{bmatrix} 0 \\ 0 \\ 0 \\ \dfrac{-1}{C_S+C_P} \end{bmatrix} \tilde{i}_L$$

Diese Zustandsgleichung gilt für einen bestimmten Betriebspunkt des Batterieemulators 1. Daher muss das Modell im Betrieb an den jeweiligen Betriebspunkt angepasst werden. Der Vorteil bei Verwendung dieses Lastmodells ist, dass dafür nur zwei zusätzlich Parameter benötigt werden, die einfach zu bestimmen sind.

Für die Regelung wird das zeitkontinuierliche Zustandsraummodell in bekannter Weise in ein zeitdiskretes Zustandsraummodell umgewandelt. Die Abtastung A ist in Fig.3 angedeutet und kann z.B. mit einer Frequenz von 16kHz erfolgen.

Das Modell des Batterieemulators 1 mit den Modellparametern kann vorab erstellt werden und kann als bekannt angesehen werden. Das Lastmodell hingegen kann sich je nach angeschlossener elektrischer Last ändern und ist oftmals nicht bekannt. Hier kann so vorgegangen werden, dass die Modellparameter des Lastmodells durch automatisierte Identifikationsmethoden, die an sich bekannt sind, identifiziert werden.

Dazu kann die Prüfanordnung bestehend aus Batterieemulator 1 und Prüfling 10 mit einer Anregesequenz in Form eines vorgegebenen zeitlichen Verlaufs der Ausgangsspannung $u_A$ angeregt werden. Wenn die Eingangskapazität $C_P$ des Prüflings 10 kleiner ist als die Kapazität des Stützkondensators $C_S$, kann die Identifikation mit abgeklemmtem Prüfling 10 erfolgen. Wenn die Eingangskapazität $C_P$ des Prüflings gleich oder größer ist als die Kapazität des Stützkondensators $C_S$, beeinflusst der Prüfling 10 die Dynamik maßgeblich und muss für die Parameteridentifikation angeschlossen sein. Die Parameteridentifikation kann dann aber ohne Belastung und bei abgeschaltetem Prüfling 10 erfolgen. Die Reaktion der Prüfanordnung in Form der Messgrößen (gemäß der Modellstruktur) wird gemessen und aufgezeichnet. Danach wird das Modell des Batterieemulators 1 (Ausgangsfilter 8 + Leitung 4 + Anschlussbox 7 mit Stützkondensators $C_S$ + gegebenenfalls Prüfling 10) mit derselben Anregesequenz angeregt und der Modellausgang wird simuliert und ebenfalls aufgezeichnet. Der Unterschied zwischen den gemessen Messgrößen/Signalen und den simulierten Messgrößen/Signalen wird dann als Fehler verwendet, um in einer Optimierung diesen Fehler, beispielsweise als Summe der Fehlerquadrate, als Funktion der Modellparameter zu minimieren. Diese Identifikation des Lastmodells kann beispielsweise vor jedem Prüflauf, oder auch einmal für jeden Prüfling 10, durchgeführt werden.

**Patentansprüche**

1. Verfahren zum Regeln eines Batterieemulators (1) mit einem Ausgangsfilter (6) mit einer Filterkapazität ($C_F$) und einem dazu parallel geschalteten Stützkondensator ($C_S$), an dem eine Ausgangsspannung ($u_A$) anliegt, wobei die Filterkapazität ($C_F$) des Batterieemulators (1) über eine elektrische Leitung (4) mit dem Stützkondensator ($C_S$) verbunden wird, um den Stützkondensator ($C_S$) örtlich von den restlichen Komponenten des Batterieemulators (1) zu trennen, und zur Regelung der Ausgangsspannung ($u_A$) eine modellbasierte Regelung mit einem Modell des Batterieemulators (1) verwendet wird, wobei in das Modell des Batterieemulators (1) eine Leitungsinduktivität ($L_L$) der elektrischen Leitung (4) und der Stützkondensator ($C_S$) eingebunden wird.

2. Verfahren nach Anspruch 1, **dadurch gekennzeichnet, dass** in das Modell des Batterieemulators (1) zusätzlich ein Lastmodell eines vom Batterieemulator (1) versorgten elektrischen Prüflings (10) eingebunden wird.

3. Verfahren nach Anspruch 2, **dadurch gekennzeichnet, dass** als Lastmodell eine Eingangskapazität ($C_P$) des Prüflings (10) verwendet wird.

4. Verfahren nach Anspruch 2, **dadurch gekennzeichnet, dass** als Lastmodell eine Konstantleistungslast (CPL) verwendet wird, wobei die Konstantleistungslast (CPL) um einen Betriebspunkt des Batterieemulators (1) linearisiert wird.

5. Batterieemulator mit einer Spannungsversorgung (8), die einen eingangsseitigen Gleichrichter (2) mit einem Gleichspannungszwischenkreis (9), einen damit verbundenen Gleichspannungswandler (3) und ein Ausgangsfilter (6) mit einer Filterkapazität ($C_F$) am Ausgang des Gleichspannungswandles (3) aufweist, weiters mit einem zur Filterkapazität ($C_F$) parallel geschalteten Stützkondensator ($C_S$), an dem eine Ausgangsspannung ($u_A$) anliegt und der örtlich getrennt von der Spannungsversorgung (8) angeordnet ist, wobei die Filterkapazität ($C_F$) über eine elektrische Leitung (4) mit dem Stützkondensator ($C_S$) verbunden ist, und mit einer Emulator-Regeleinheit (5) zur modellbasierten Regelung der Ausgangsspannung ($u_A$) des Batterieemulators (1), in der ein Modell des Batterieemulators (1) implementiert ist, wobei in das Modell des Batterieemulators (1) eine Leitungsinduktivität ($L_L$) der elektrischen Leitung (4) und der Stützkondensator ($C_S$) eingebunden ist.

6. Verwendung des Batterieemulators nach Anspruch 5 zur Prüfung eines elektrischen Prüflings (10), wobei der Batterieemulator (1) mit dem elektrischen Prüfling (10) verbunden ist und eine Versorgungsspannung ($u_A$) für den elektrischen Prüfling (10) bereitstellt.

7. Verwendung nach Anspruch 6, **dadurch gekennzeichnet, dass** in das Modell des Batterieemulators (1) zusätzlich ein Lastmodell des elektrischen Prüflings (10) eingebunden ist.

**Claims**

1. A method for controlling a battery emulator (1) having an output filter (6) with a filter capacitor ($C_F$) and a back-up capacitor ($C_S$) to which an output voltage ($u_A$) is applied and that is connected in parallel to the filter capacitor ($C_F$), wherein the filter capacitor ($C_F$) of the battery emulator (1) is connected to the back-up capacitor ($C_S$) with an electric line (4), in order to separate the back-up capacitor ($C_S$) locally from the rest of the components of the battery emulator (1), and for controlling the output voltage ($u_A$) a model-based control using a model of the battery emulator (1) is employed, wherein a line inductance ($L_L$) of the electric line (4) and the back-up capacitor ($C_S$) is integrated into the model of the battery emulator (1).

2. The method according to 1, **characterized in that** a load model of an electrical test object (10) that is powered by the battery emulator (1) is additionally integrated into the model of the battery emulator (1).

3. The method according to 2, **characterized in that** an input capacitance ($C_P$) of the test object (10) is used as the load model.

4. The method according to 2, **characterized in that** a constant power load (CPL) is used as the load model, wherein the constant power load (CPL) is linearized around an operating point of the battery emulator (1).

5. Battery emulator having a voltage supply (8), which has an input-side rectifier (2) with a direct current intermediate circuit (9), a DC-DC converter (3) that is connected thereto and an output filter (6) with a filter capacitor ($C_F$) at the output of the DC-DC converter (3), also having a back-up capacitor ($C_S$) to which an output voltage ($u_A$) is applied and which is connected in parallel to the filter capacitor ($C_F$), which is locally separated from the voltage supply (8), wherein the filter capacitor ($C_F$) is connected to the back-up capacitor ($C_S$) with an electric line (4), and having an emulator control unit (5) for the model-based control of the battery emulator (1), in which a model of the battery emulator (1) is implemented, wherein a line inductance ($L_L$) of the electric line (4) and the back-up capacitor ($C_S$) is integrated into the model of the battery emulator (1).

6. Use of the battery emulator according to claim 5 for testing an electrical test object (10), wherein the battery emulator (1) is connected to the electrical test object (10) and provides a supply voltage ($u_A$) for the electrical test object (10).

7. Use according to claim 6, **characterized in that** a load model of an electrical test object (10) is additionally integrated into the model of the battery emulator (1).

**Revendications**

1. Procédé de réglage d'un émulateur de batterie (1) comportant un filtre de sortie (6) avec une capacité de filtrage ($C_F$) et un condensateur auxiliaire ($C_s$) monté en parallèle avec celui-ci, auquel une tension de sortie ($u_A$) est appliquée, la capacité de filtrage ($C_F$) de l'émulateur de batterie (1) étant reliée au condensateur auxiliaire ($C_s$) par l'intermédiaire d'une ligne électrique (4) afin de séparer localement le condensateur auxiliaire ($C_s$) des autres composants de l'émulateur de batterie (1), et un réglage basé sur un modèle de l'émulateur de batterie (1) étant utilisé pour régler la tension de sortie ($u_A$),
une inductance de ligne ($L_L$) de la ligne électrique (4) et le condensateur auxiliaire ($C_s$) étant intégrés au modèle de l'émulateur de batterie (1).

2. Procédé selon la revendication 1, **caractérisé en ce qu'un** modèle de charge d'un échantillon électrique (10) fourni par l'émulateur de batterie (1) est en outre intégré au modèle de l'émulateur de batterie (1).

3. Procédé selon la revendication 2, **caractérisé en ce qu'**une capacité d'entrée ($C_P$) de l'échantillon (10) est utilisée comme modèle de charge.

4. Procédé selon la revendication 2, **caractérisé en ce qu'**une charge à puissance constante (CPL) est utilisée comme modèle de charge, la charge à puissance constante (CPL) étant linéarisée autour d'un point de fonctionnement de l'émulateur de batterie (1).

5. Émulateur de batterie comportant une alimentation en tension (8) qui comporte un redresseur (2) du côté entrée avec un circuit intermédiaire à courant continu (9), un convertisseur continu-continu (3) qui est relié à celui-ci et un filtre de sortie (6) avec une capacité de filtrage ($C_F$) à la sortie du convertisseur continu-continu (3), et comportant en outre un condensateur auxiliaire ($C_s$), qui est monté en parallèle avec la capacité de filtrage ($C_F$), auquel une tension de sortie ($u_A$) est appliquée et qui est séparé localement de l'alimentation en tension (8), la capacité de filtrage ($C_F$) étant reliée au condensateur auxiliaire ($C_s$) par l'intermédiaire d'une ligne électrique (4), et comportant une unité de réglage d'émulateur (5) pour le réglage basé sur modèle de la tension de sortie ($u_A$) de l'émulateur de batterie (1), dans laquelle un modèle de l'émulateur de batterie (1) est mis en oeuvre,
une inductance de ligne ($L_L$) de la ligne électrique (4) et le condensateur auxiliaire ($C_s$) étant intégrés au modèle de l'émulateur de batterie (1).

6. Utilisation de l'émulateur de batterie selon la revendication 5 pour tester un échantillon électrique (10), l'émulateur de batterie (1) étant relié à l'échantillon électrique (10) et fournissant une tension d'alimentation ($u_A$) pour l'échantillon électrique (10).

7. Utilisation selon la revendication 6, **caractérisée en ce qu'**un modèle de charge de l'échantillon électrique (10) est en outre intégré au modèle de l'émulateur de batterie (1).

Fig. 1

(Stand der Technik)

Fig. 2

Fig. 3

EP 3 328 677 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013174967 A1
- WO 2013135741 A1

- JP 3402117 B

**In der Beschreibung aufgeführte Nicht-Patentliteratur**

- **KÖNIG O. et al.** Model Predictive Control of a Battery Emulator for Testing of Hybrid and Electric Powertrains. *2011 IEEE Vehicle Power and Propulsion Conference, Chicago, Illinois, USA,* 06. September 2011